# DEMANDE DE BREVET EUROPEEN

(11) **EP 1 231 497 A2**
(43) Date de publication de la demande: **14.08.2002**
(21) Numéro de dépôt: 02290307.4
(22) Date de dépôt: 07.02.2002
(51) Int. Cl.: G02B 27/00, G02B 17/08, G02B 23/06

(54) **Télescope astronomique**

(30) Priorité: 07.02.2001 FR 0101654
(71) Demandeur: Dubuisson, Jean-Sébastian, 92400 Courbevoie (FR)
(72) Inventeur: Dubuisson, Jean-Sébastian, 92400 Courbevoie (FR)
(74) Mandataire: Catherine, Alain

(57) **Abrégé**

L'invention concerne un télescope astronomique comprenant, dans l'ordre, de l'entrée d'un faisceau lumineux à sa sortie, un miroir réflecteur sphérique concave (16), un miroir réflecteur sphérique convexe (17), un système optique de correction d'aberration. Le système optique comprend un premier et un second correcteurs sphériques, comprenant, ensemble, quatre lentilles (18-21) corrigeant les aberrations.

Applications possibles à l'astronomie.

## Description

La présente invention concerne un télescope astronomique.

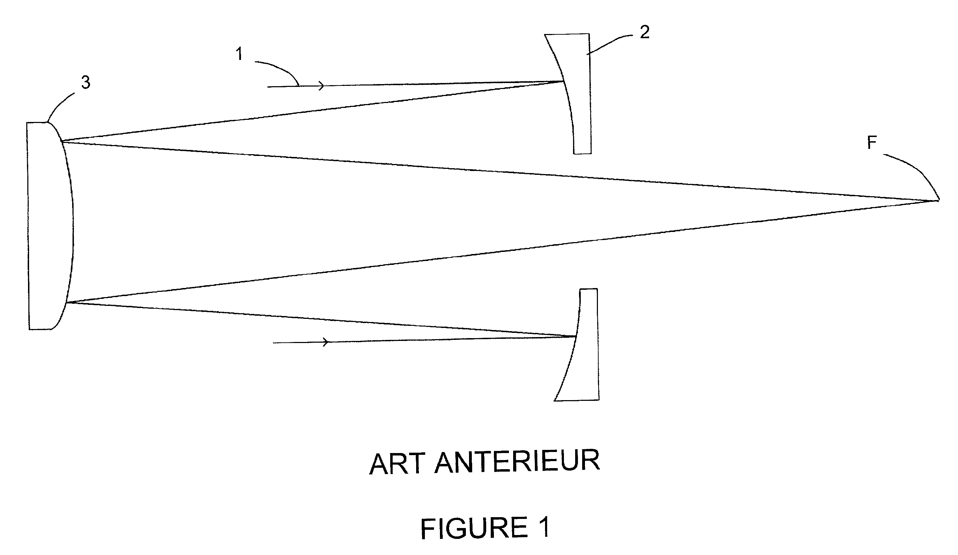

La Figure 1 est une représentation schématique d'un système optique tel que mis en oeuvre dans un télescope astronomique dit de Cassegrain de l'art antérieur. Le système optique est arrangé de telle sorte que le flux lumineux 1 provenant d'un objet à l'infini, transmis dans une direction venant de la gauche de la Figure 1, se trouve réfléchi par un miroir parabolique 2, dit miroir primaire. Le faisceau ainsi réfléchi tombe alors sur un miroir hyperbolique convexe 3, dit miroir secondaire, dont l'un des foyers coïncide avec celui du miroir parabolique 2. Le faisceau réfléchi par le miroir secondaire 3 forme une image au second foyer F du miroir hyperbolique. Le miroir primaire 2 étant percé en son centre, le second foyer du miroir hyperbolique 3 se trouve être en retrait par rapport au tube portant le miroir primaire 2. Ce foyer 4 est appelé Foyer de Cassegrain.

Il est connu que le télescope de Cassegrain peut être utilisé comme un réflecteur présentant une large ouverture. Cependant, les aberrations hors de l'axe optique réduisent alors considérablement l'angle de champ utile. En effet, dès un champ de l'ordre de 1°, les aberrations de coma et d'astigmatisme sont très importantes.

L'objectif de la présente invention est de proposer un télescope astronomique simple dans sa conception et dans son mode opératoire, réalisé avec des miroirs sphériques et permettant d'obtenir un angle de champ large sans les problèmes d'aberrations rencontrés par le télescope de Cassegrain.

A cet effet, l'invention concerne un télescope astronomique comprenant, dans l'ordre, de l'entrée d'un faisceau lumineux à sa sortie :
- un miroir réflecteur sphérique concave,
- un miroir réflecteur sphérique convexe et
- un système optique de correction d'aberrations.

Selon l'invention, le système optique de correction d'aberrations comprend au moins quatre lentilles corrigeant les aberrations.

Dans différents modes de réalisation particuliers, chacun ayant ses avantages particuliers et susceptibles de nombreuses combinaisons techniquement possibles, ce télescope présente les caractéristiques suivantes :
- le système optique de correction d'aberrations comprend quatre lentilles sphériques regroupées en un premier et un second correcteurs sphériques,
- le premier correcteur sphérique comprend deux lentilles, la première lentille présentant une face d'entrée concave pour un faisceau lumineux et la seconde lentille présentant une face de sortie convexe,
- le second correcteur sphérique comprend deux lentilles, la première lentille présentant une face d'entrée convexe pour un faisceau lumineux et la seconde lentille présentant une face de sortie concave,
- le système optique comprend au moins cinq lentilles sphériques formant un seul correcteur sphérique,
- le télescope comprend une lentille de champ disposée entre le miroir réflecteur sphérique convexe et le correcteur sphérique et une lentille de correction de champ disposée entre le correcteur sphérique et la sortie du faisceau lumineux,
- les demi-diamètres du miroir réflecteur sphérique convexe et des lentilles du correcteur sphérique sont inférieurs à 50 mm,
- les lentilles sont formées d'un verre courant,
- les lentilles sont formées d'un verre ayant un indice de réfraction de l'ordre de 1,5,
- les lentilles sont formées d'un verre de type Schott BK7,
- les lentilles sont séparées par un espace d'air,
- le premier et second miroirs réflecteurs et l'ensemble des lentilles ont les spécificités indiquées dans cinq tableaux figurant à la fin de la description de chacun des modes de réalisation et des exemples de réalisation afférents.

L'invention sera décrite plus en détail en référence aux dessins annexés dans lesquels :
- la figure 1 est une représentation schématique d'un télescope de Cassegrain de l'art antérieur décrit plus haut ;
- la figure 2 est une représentation schématique du télescope astronomique, selon un premier mode de réalisation ;
- les figures 3 à 5 sont des représentations schématiques de trois configurations différentes du télescope selon un second mode de réalisation ;
- la figure 6 est une représentation schématique de l'image d'une source circulaire obtenue avec un télescope selon la figure 2, au centre du plan focal, en fonction de l'angle d'incidence du faisceau lumineux par rapport à l'axe optique ;
- les figures 7 à 10 sont des représentations schématiques de l'image d'une source circulaire obtenue avec un télescope selon les figures 3 à 5, au centre du plan focal, en fonction de l'angle d'incidence du faisceau lumineux par rapport à l'axe optique.

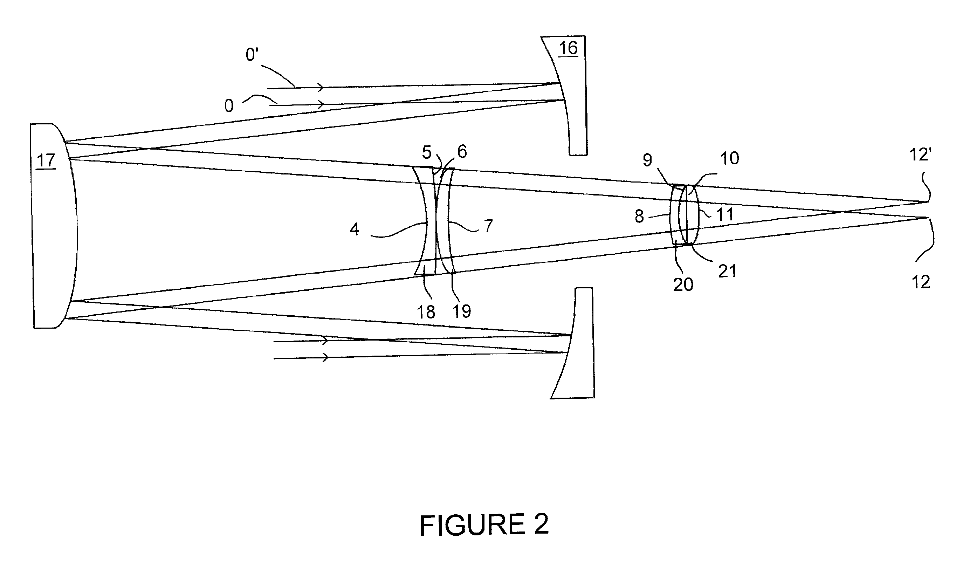

La Figure 2 est donc une représentation schématique d'un premier mode de réalisation du télescope, selon l'invention. Le télescope est un télescope astronomique dont les miroirs réflecteurs 16, 17 sont à surface sphérique et auxquels a été associé un système optique 18-21 de correction d'aberrations. On entend par télescope astronomique à surface sphérique, un télescope de même schéma que le télescope de Cassegrain mais dans lequel les miroirs n'ont pas comme méridiennes la parabole et l'hyperbole mais des cercles. Ces miroirs 16, 17 sont donc faciles à polir optiquement mais présentent une aberration sphérique importante à l'infini. Il est alors nécessaire de corriger cette aberration. Le système optique de correction d'aberrations comprend deux correcteurs sphériques, chacun comprenant deux lentilles. Ces lentilles 18-21 sont des lentilles sphériques qui corrigent d'une part les aberrations sphériques générées par le premier 16 et second 17 miroirs réflecteurs sphériques, respectivement concave et convexe, et d'autre part les aberrations chromatiques générées par les lentilles 18-21 elles-mêmes.

Le système optique est arrangé de telle sorte qu'un flux lumineux, provenant d'un objet céleste placé à l'infini et se propageant soit suivant l'axe optique, 0, soit hors de l'axe optique avec un angle de champ de 0,5°, 0', est transmis dans une direction venant de la gauche de la Figure 2 et se trouve alors réfléchi par un miroir sphérique concave 16, dit miroir primaire. Le demi-diamètre du miroir primaire 16 est de 200 mm. Ce miroir 16 est percé en son centre. Le faisceau ainsi réfléchi tombe sur un miroir sphérique convexe 17, dit miroir secondaire. Le demi-diamètre du miroir secondaire 17 est de 98 mm. Le faisceau réfléchi par le miroir secondaire 17 tombe alors sur un système optique de correction d'aberrations comprenant deux correcteurs sphériques. Chaque correcteur sphérique comprend une première 18, 20 et une seconde 19, 21 lentilles sphériques. La première lentille sphérique 18 du premier correcteur présente une face d'entrée 4 concave pour le faisceau lumineux et la seconde lentille sphérique 19 du premier correcteur présente une face de sortie 7 convexe. Le demi-diamètre des lentilles sphériques 18 et 19 du premier correcteur est de 63 mm. A la sortie du premier correcteur sphérique, le faisceau lumineux tombe sur le second correcteur sphérique. La première lentille sphérique 20 du second correcteur présente une face d'entrée 8 convexe pour un faisceau lumineux et la seconde lentille sphérique 21 du second correcteur présente une face de sortie 11 concave. Le demi-diamètre des lentilles sphériques 20 et 21 du second correcteur est de 40 mm. Les lentilles sphériques 18-21 sont formées d'un verre courant ayant un indice de réfraction de l'ordre de 1,5, par exemple un verre de type Schott BK7 (Marque déposée de la société Schott) dont l'indice de réfraction est 1,517. Il est connu que cette référence commerciale peut être remplacée par une référence équivalente. Les lentilles 18-21 sont séparées par un espace d'air. L'image portée par le faisceau lumineux se propageant suivant l'axe optique 0 se forme au foyer 12. L'image portée par le faisceau lumineux se propageant hors de l'axe optique avec un angle de champ de 0,5° se forme au foyer 12'.

De préférence, on choisit pour ce premier mode de réalisation du télescope de l'invention, la configuration selon le tableau 1 dans lequel le numéro (No) désigne un dioptre ou un milieu (dans l'ordre de propagation de la lumière) et les autres colonnes fournissent les caractéristiques des dioptres, les longueurs étant exprimées en millimètres avec notation exponentielle pour les grandes valeurs (par ex. : e+8 signifiant 10⁸) :

**TABLEAU 1**

| No. | Rayon de courbure | Epaisseur | Demi-diamètre | Indice |
|---|---|---|---|---|
| 0 | 0 | 1,0000e+8 | | 1 |
| 1 | 0 | 0 | | 1 |
| 2 | -2,4500e+03 | -647,630000 | 200,000000 | -1 |
| 3 | -2,4396e+03 | 482,770000 | 98,000000 | 1 |
| 4 | -344,340000 | 8,877800 | 63,000000 | 1,517 |
| 5 | -823,290000 | 1,236200 | 63,000000 | 1 |
| 6 | 214,220000 | 10,55900 | 63,000000 | 1,517 |
| 7 | 341,720000 | 285,4200 | 63,000000 | 1 |
| 8 | 442,130000 | 6,343300 | 40,000000 | 1,517 |
| 9 | 146,840000 | 6,337600 | 40,000000 | 1 |
| 10 | 289640000 | 9,624500 | 40,000000 | 1,517 |
| 11 | -244,130000 | 222,680000 | 26,000000 | 1 |
| 12 | 0 | 302,412000 | 26,000000 | 1 |
| 13 | 0 | 0 | 26,000000 | 1 |

On obtient ainsi une bonne correction des aberrations dans le visible.

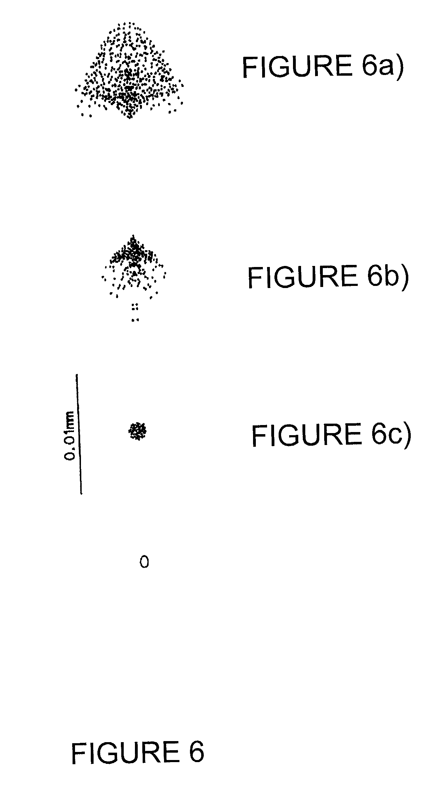

La Figure 6 est une représentation schématique de l'image d'une source circulaire, au centre du plan focal du télescope selon la Figure 2 et le Tableau 1, en fonction de l'angle d'incidence du faisceau lumineux par rapport à l'axe optique. La Figure 6a) a été obtenue pour un angle de champ large, de l'ordre de 0,5°. La Figure 6b) a été obtenue pour un angle de champ de l'ordre de 0,35° et la Figure 6c) a été obtenue pour un faisceau lumineux se propageant suivant l'axe optique. L'image sur la Fig. 6c) permet donc d'apprécier les corrections d'aberrations apportées à l'aberration sphérique résultant de la mise en oeuvre de miroirs réflecteurs sphériques 16 et 17, selon l'invention. Les aberrations sont bien corrigées dans le visible et particulièrement pour une source émettant entre 0,486 µm et 0,656 µm.

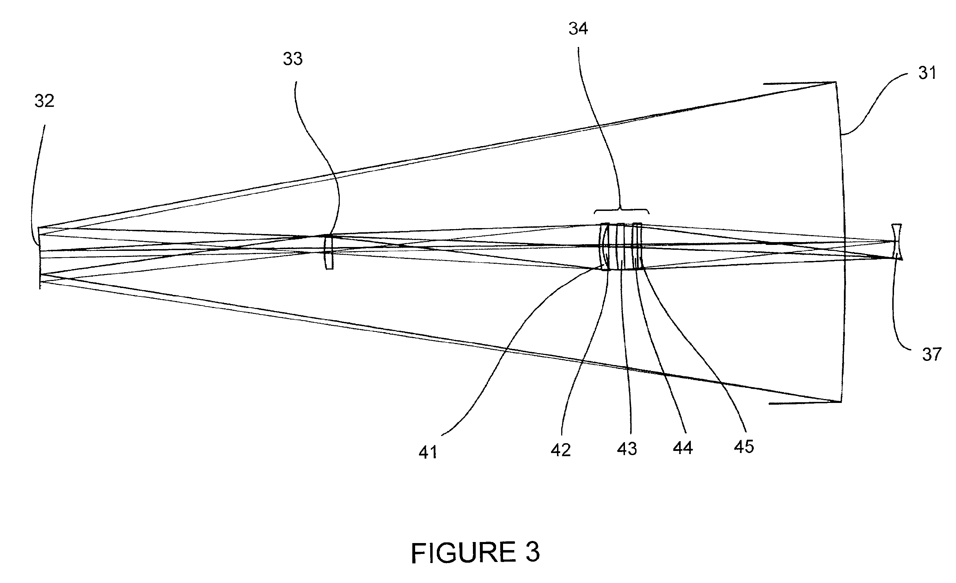

Les figures 3 à 5 sont des représentations schématiques de trois configurations différentes d'un second mode de réalisation du télescope selon l'invention. Ces trois configurations ont en commun, avec la configuration selon le premier mode de réalisation, que le télescope astronomique comprend deux miroirs réflecteurs à surface sphérique auxquels est associé un système optique de correction d'aberrations. Ainsi, un flux lumineux, provenant d'un objet céleste placé à l'infini et se propageant soit suivant l'axe optique du télescope, soit hors de l'axe optique avec un angle de champ de 0,5°, est transmis dans une direction venant de la gauche des figures 3 à 5 et se trouve alors réfléchi par un miroir sphérique concave 31, dit miroir primaire. Le demi-diamètre du miroir primaire 31 est de 200 mm et correspond ainsi à celui du miroir primaire 16 selon le premier mode de réalisation. Le miroir 31 est percé en son centre. Le faisceau ainsi réfléchi tombe sur un miroir sphérique convexe 32, dit miroir secondaire. Le demi-diamètre du miroir secondaire 32 est inférieur à la moitié du demi-diamètre du miroir secondaire 17 du premier mode de réalisation, c'est-à-dire inférieur à 50 mm. Dans les trois configurations représentées sur les figures 3 à 5, le demi-diamètre du miroir secondaire 32 est même inférieur à 40 mm, comme les tableaux 2 à 5 l'indiquent. Le faisceau réfléchi par le miroir secondaire 32 est focalisé par ce dernier de manière telle que l'image portée par le faisceau lumineux se forme à une faible distance avant une lentille de champ 33 disposée entre le miroir secondaire et le système optique de correction, référencé 34, 35 ou 36 selon la configuration particulière. Le faisceau sortant du système optique de correction tombe enfin sur une lentille de correction de champ 37 à la sortie de laquelle se forme à nouveau l'image portée par le faisceau lumineux. La lentille de champ 33 et la lentille de correction de champ 37 ont chacune un demi-diamètre d'environ 20 mm.

La figure 3 est donc une représentation schématique d'une première configuration du second mode de réalisation du télescope de l'invention. Selon cette configuration, le système optique de correction d'aberrations, référencé ici 34, comprend cinq lentilles 41 à 45 qui sont des lentilles sphériques et qui corrigent les aberrations sphériques générées par le premier 31 et le second 32 miroirs réflecteurs sphériques, respectivement concave et convexe, d'une part, et les aberrations chromatiques générées par les lentilles 41 à 45 elles-mêmes, d'autre part.

Les deux premières et les deux dernières lentilles des cinq lentilles 41 à 45 du système optique de correction 34 forment des blocs de lentilles sans couche d'air entre les deux lentilles respectives 41, 42 et 44, 45. Par contre, il y a des couches d'air entre le premier bloc de lentilles 41, 42 et la troisième lentille 43 et entre la troisième lentille 43 et le second bloc de lentilles 44, 45. La première lentille 41 présente une face d'entrée convexe pour le faisceau lumineux et la seconde lentille présente une face de sortie concave. La troisième lentille 43 présente une face d'entrée convexe et une face de sortie convexe. La quatrième lentille 44 présente une face d'entrée convexe et la cinquième lentille présente une face de sortie convexe. Le demi-diamètre des lentilles sphériques 41 à 45 est inférieur à 30 mm comme les tableaux 2 et 3 de caractéristiques l'indiquent.

La première configuration du second mode de réalisation dont les caractéristiques sont représentées sur le Tableau 2, et sa variante dont les caractéristiques sont représentées sur le Tableau 3, diffèrent l'une de l'autre en les caractéristiques optiques de la lentille de correction de champ 37 respective. Alors que dans la première configuration, cette lentille présente une face d'entrée concave et une face de sortie convexe de rayons sphériques très différents, la lentille de correction de champ de la variante comprend une face d'entrée concave et une face de sortie convexe de même rayon sphérique.

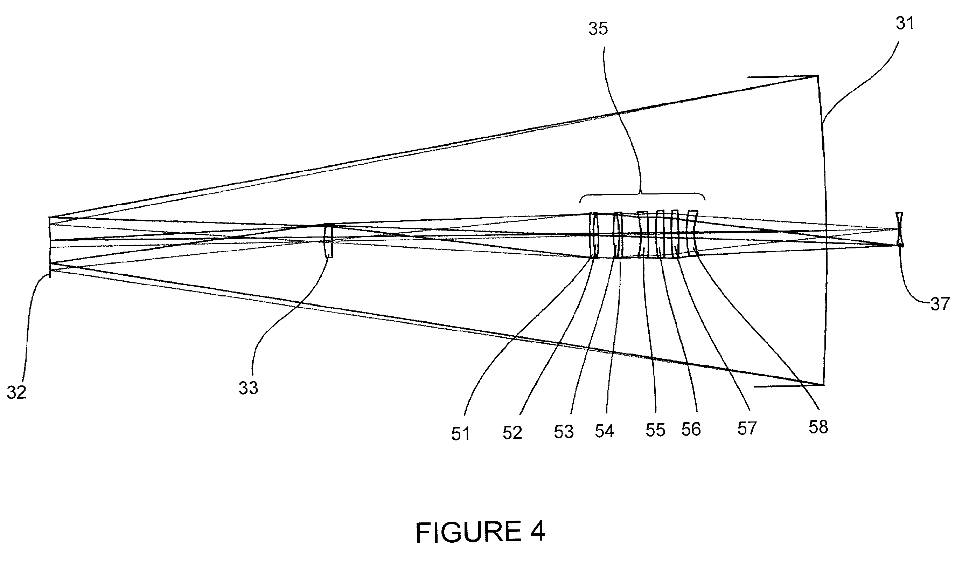

La figure 4 est une représentation schématique d'une deuxième configuration du second mode de réalisation du télescope de l'invention. Dans cette configuration, le système optique de correction d'aberrations, qui est référencé ici 35, comprend huit lentilles 51 à 58 dont les deux premières et les troisième et quatrième lentilles forment des blocs de lentilles. Entre deux lentilles de chacun de ces blocs de lentilles, il n'y a pas de couche d'air. Par contre, les deux blocs de lentilles 51, 52 et 53, 54 et les quatre lentilles 55 à 58 sont séparés les uns des autres par une couche d'air. La première lentille 51 a une face d'entrée convexe et la deuxième lentille 52 a une face de sortie concave. La troisième lentille 53 a une face d'entrée convexe et la quatrième lentille 54 a une face de sortie concave. La cinquième lentille 55 a une face d'entrée et une face de sortie concaves. La sixième lentille 56 a une face d'entrée et une face de sortie convexes. La septième lentille 57 a une face d'entrée convexe et une face de sortie concave. La huitième lentille 58 a une face d'entrée et une face de sortie convexes. Les huit lentilles 51 à 58 du système optique de correction 35 sont des lentilles sphériques. Elles ont différents demi-diamètres dont chacun est de l'ordre de 30 mm, comme le Tableau 4 l'indique.

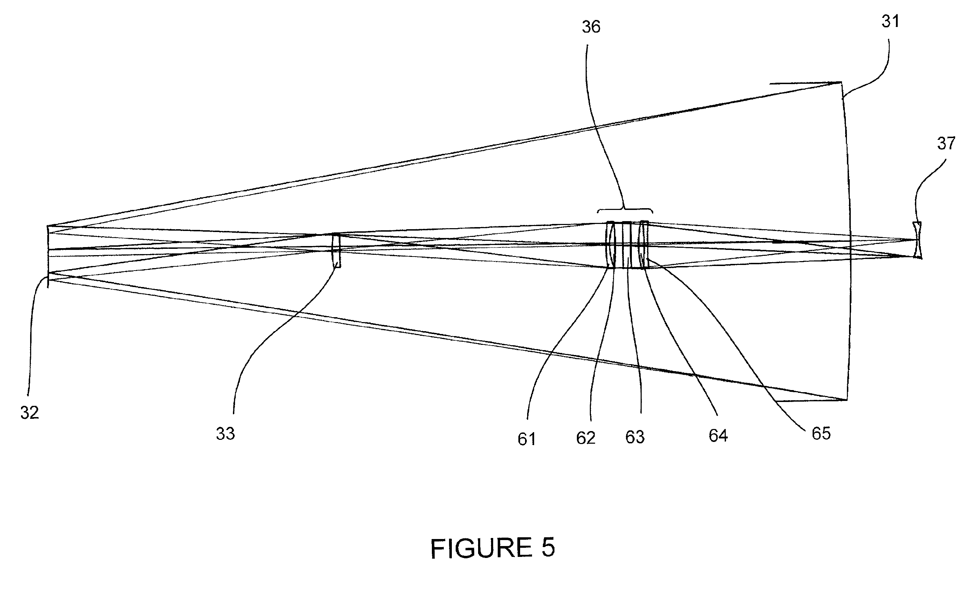

La figure 5 est une représentation schématique d'une troisième configuration du second mode de réalisation du télescope de l'invention. Cette fois-ci, le système optique de correction d'aberrations, ici référencé 36, comprend cinq lentilles sphériques 61 à 65 comme le système optique 34 de la première configuration du second mode de réalisation et sa variante. De même, les cinq lentilles ont des demi-diamètres de l'ordre de 30 mm, et les deux premières lentilles 61, 62 et les deux dernières lentilles 64, 65, forment des blocs de lentilles dont les deux lentilles correspondantes ne sont pas séparées par des couches d'air. Par contre, les deux blocs de lentilles 61, 62 et 64, 65 et la troisième lentille 63 sont séparés les uns des autres par des couches d'air. La première lentille 61 présente une face d'entrée convexe et la deuxième lentille 62 présente une face de sortie concave. La troisième lentille 63 présente une face d'entrée et une face de sortie planes. La quatrième lentille 64 présente une face d'entrée convexe et la cinquième lentille 65 présente également une face de sortie convexe. Les caractéristiques détaillées de cette troisième configuration du second mode de réalisation sont présentées sur le Tableau 5 des caractéristiques.

De préférence, on choisit pour ce second mode de réalisation du télescope de l'invention les configurations et la variante selon les tableaux 2 à 5 dans lesquels le numéro (No) désigne un dioptre ou un milieu (dans l'ordre de propagation de la lumière) et les autres colonnes fournissent les caractéristiques des dioptres, les longueurs étant exprimées en millimètres avec notation exponentielle pour les grandes valeurs (par ex. : e+8 signifiant 10⁸) :

**TABLEAU 2**

| No | Rayon de Courbure | Epaisseur | Demi-diamètre | Indice ou verre |
|---|---|---|---|---|
| 0 | -- | 1,0000e+20 | 8,7269e+17 | 1 |
| 1 | -- | -- | 200,000000 | 1 |
| | | | | |
| 2 | -2,4000e+03 | -1,0200e+03 | 200,000000 | 1 |
| | | | | |
| 3 | -720,000000 | 360,000000 | 38,901405 | 1 |
| | | | | |
| 4 | 118,500000 | 10,000000 | 20,944483 | 1,517 |
| 5 | -- | -6,592827 | 21,112228 | 1 |
| | | | | |
| 6 | -- | 344,083326 | 20,944483 | 1 |
| | | | | |
| 7 | 158,612660 | 4,666659 | 29,699207 | F4 C |
| 8 | 57,743842 | 6,999989 | 29,439375 | 1,517 |
| 9 | -1,8182e+03 | 10,000000 | 29,258779 | 1 |
| | | | | |
| 10 | 215,397651 | 10,000000 | 28,859433 | 1,517 |
| 11 | 1,7906e+03 | 10,000000 | 28,888822 | 1 |
| | | | | |
| 12 | 244,053060 | 6,999989 | 29,016779 | 1,517 |
| 13 | 2,9310e+04 | 4,666659 | 28,792263 | F4 C |
| 14 | 705,295923 | 322,500000 | 28,651543 | 1 |
| | | | | |
| 15 | -33,000000 | 5,000000 | 21,008485 | 1,517 |
| 16 | 100,000000 | 0,208719 | 22,014900 | 1 |
| | | | | |
| 17 | -- | -- | 22,102370 | 1 |

**TABLEAU 3**

| No | Rayon de Courbure | Epaisseur | Demi-diamètre | Indice ou verre |
|---|---|---|---|---|
| 0 | -- | 1,0000e+20 | 8,7269e+17 | 1 |
| | | | | |
| 1 | -- | -- | 200,000000 | 1 |
| | | | | |
| 2 | -2,4000e+03 | -1,0200e+03 | 200,000000 | -1 |
| | | | | |
| 3 | -720,000000 | 360,000000 | 38,901405 | 1 |
| | | | | |
| 4 | 118,500000 | 10,000000 | 20,944483 | 1,517 |
| 5 | -- | -6,592827 | 21,112228 | 1 |
| | | | | |
| 6 | -- | 344,083326 | 20,944483 | 1 |
| | | | | |
| 7 | 158,612660 | 4,666659 | 29,699207 | F4 C |
| 8 | 57,743842 | 6,999989 | 29,439375 | 1,517 |
| 9 | -1,8182e+03 | 10,000000 | 29,258779 | 1 |
| | | | | |
| 10 | 215,397651 | 10,000000 | 28,859433 | 1,517 |
| 11 | 1,7906e+03 | 10,000000 | 28,888822 | 1 |
| | | | | |
| 12 | 244,053060 | 6,999989 | 29,016779 | 1,517 |
| 13 | 2,9310e+04 | 4,666659 | 28,792263 | F4 C |
| 14 | 705,295923 | 322,500000 | 28,651543 | 1 |
| | | | | |
| 15 | -65,000000 | 5,000000 | 21,008485 | 1,517 |
| 16 | 65,000000 | -- | 21,480974 | 1 |
| | | | | |
| 17 | -- | 0,116383 | 21,480974 | 1 |
| | | | | |
| 18 | -- | -- | 21,517533 | 1 |

**TABLEAU 4**

| No | Rayon de Courbure | Epaisseur | Demi-diamètre | Indice ou verre |
|---|---|---|---|---|
| 0 | -- | 1,0000e+20 | 8,7269e+17 | 1 |
| 1 | -- | -- | 200,000000 | 1 |
| 2 | -2,4000e+03 | -1,0200e+03 | 200,000000 | -1 |
| 3 | -720,000000 | 360,000000 | 38,901405 | 1 |
| 4 | 118,500000 | 10,000000 | 20,944483 | 1,517 |
| 5 | -- | -6,592827 | 21,112228 | 1 |
| 6 | -- | 344,083326 | 20,944483 | 1 |
| 7 | 590,565741 | 4,666659 | 29,699207 | F4 C |
| 8 | 143,534741 | 6,999989 | 29,683144 | 1,517 |
| 9 | -205,251345 | 10,000000 | 29,752704 | 1 |
| 10 | -- | 10,000000 | 29,179043 | 1 |
| 11 | 205,251345 | 6,999989 | 29,777457 | 1,517 |
| 12 | -143,534775 | 4,666659 | 29,707609 | F4 C |
| 13 | -590,565741 | 344,083347 | 29,723542 | 1 |
| 14 | -- | -320,000000 | 20,944484 | 1 |
| 15 | -109,222394 | 10,000000 | 29,109071 | 1,517 |
| 16 | -390,768926 | 10,000000 | 29,848912 | 1 |
| 17 | 208,125474 | 10,000000 | 30,576344 | 1,517 |
| 18 | 1,7739e+03 | 10,000000 | 30,555370 | 1 |
| 19 | 267,545707 | 10,000000 | 30,612572 | 1,517 |
| 20 | -395,875094 | 10,000000 | 30,260436 | 1 |
| 21 | 135,664947 | 10,000000 | 29,331277 | 1,517 |
| 22 | 81,015039 | 270,418493 | 27,982055 | 1 |
| 23 | -80,000000 | 2,000000 | 20,910419 | 1,517 |
| 24 | 80,000000 | -1,307429 | 21,274170 | 1 |
| 25 | -- | -- | 20,733809 | 1 |

**TABLEAU 5**

| No | Rayon de Courbure | Epaisseur | Demi-diamètre | Indice ou verre |
|---|---|---|---|---|
| 0 | -- | 1,0000e+20 | 8,7269e+17 | 1 |
| | | | | |
| 1 | -- | -- | 200,000000 | 1 |
| | | | | |
| 2 | -2,4000e+03 | -1,0200e+03 | 200,000000 | -1 |
| 3 | -720,000000 | 360,000000 | 38,901405 | 1 |
| | | | | |
| 4 | 118,500000 | 10,000000 | 20,944483 | 1,517 |
| 5 | -- | -6,592827 | 21,112228 | 1 |
| | | | | |
| 6 | -- | 344,083326 | 20,944483 | 1 |
| | | | | |
| 7 | 228,222728 | 4,666659 | 29,699207 | F4 C |
| 8 | 79,182134 | 6,999989 | 29,541029 | 1,517 |
| 9 | -346,668158 | 10,000000 | 29,459967 | 1 |
| | | | | |
| 10 | -- | 10,000000 | 28,903099 | 1,517 |
| 11 | -- | 10,000000 | 29,294781 | 1 |
| | | | | |
| 12 | 131,203062 | 6,999989 | 29,888886 | 1,517 |
| 13 | -360,232536 | 4,666659 | 29,619741 | F4 C |
| 14 | 684,223628 | 344,083347 | 29,475074 | 1 |
| | | | | |
| 15 | -54,710526 | 3,000000 | 21,490353 | 1,517 |
| 16 | 98,068590 | -2,666832 | 22,168075 | 1 |
| | | | | |
| 17 | -- | -- | 20,942726 | 1 |

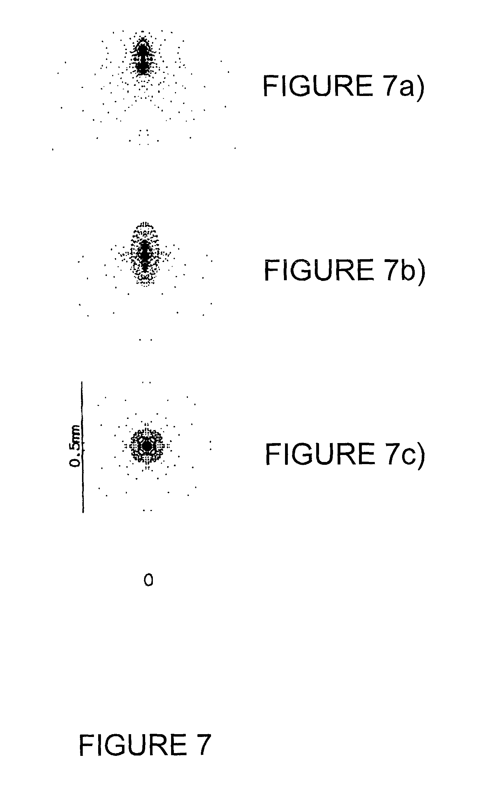

Les figures 7 à 10 sont des représentations schématiques des images d'une source circulaire, au centre du plan focal du télescope de l'invention dans les différentes configurations selon les figures 3 à 5 et les tableaux 2 à 5, en fonction de l'angle d'incidence du faisceau lumineux par rapport à l'axe optique :
Figure 7 : 1^{ère} configuration selon Figure 3 et Tableau 2

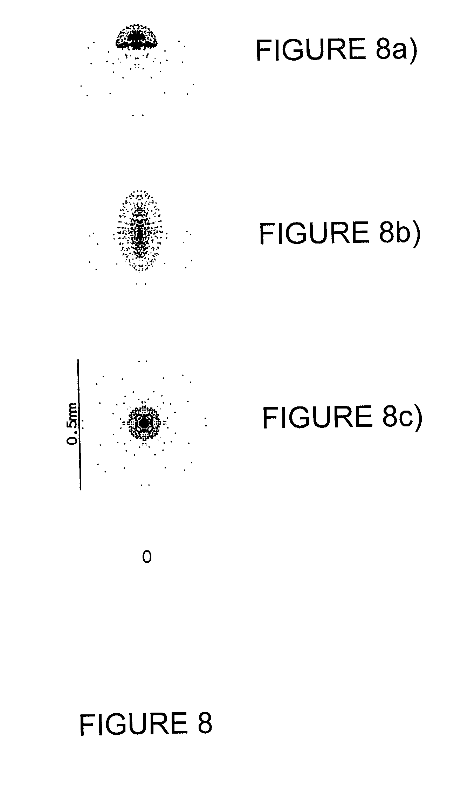

Figure 8 : 1^{ère} conf. (variante) selon Figure 3 et Tableau 3

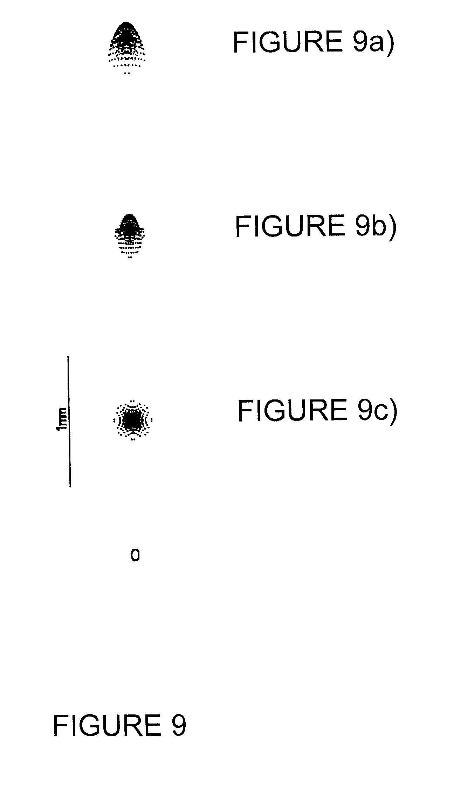

Figure 9 : 2^{ème} configuration selon Figure 4 et Tableau 4

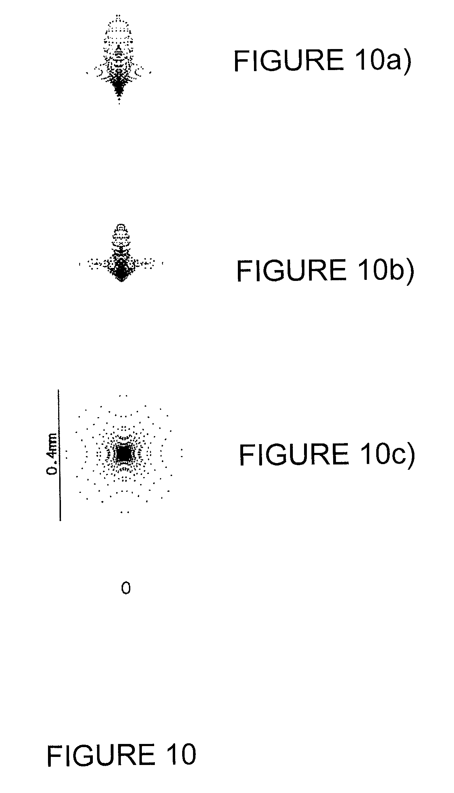

Figure 10 : 3^{ème} configuration selon Figure 5 et Tableau 5

Chacune des figures 7 à 10 comprend une figure a) obtenue pour un angle de champ large, de l'ordre de 0,5°, une figure b) obtenue pour un angle de champ de l'ordre de 0,35° et une figure c) obtenue pour un faisceau lumineux se propageant suivant l'axe optique.

Les images sur les figures 7c) à 10c) permettent donc d'apprécier les corrections d'aberrations apportées à l'aberration sphérique résultant de la mise en oeuvre des miroirs réflecteurs sphériques 31 et 32, selon l'invention. Les aberrations sont bien corrigées dans le visible et particulièrement pour une source émettant entre 0,486 µm et 0,656 µm, comme avec le télescope astronomique selon le premier mode de réalisation de l'invention.

## Revendications

1. Télescope astronomique comprenant, dans l'ordre, de l'entrée d'un faisceau lumineux à sa sortie :
- un miroir réflecteur sphérique concave (16, 31),
- un miroir réflecteur sphérique convexe (17, 32),
- un système optique de correction d'aberrations,
**caractérisé en ce que** ledit système optique comprend au moins quatre lentilles (18-21, 41-45, 51-58, 61-65) corrigeant les aberrations.

2. Télescope astronomique selon la revendication 1, **caractérisé en ce que** ledit système optique comprend quatre lentilles (18-21) sphériques regroupées en un premier correcteur sphérique et un second correcteur sphérique.

3. Télescope astronomique selon la revendication 2, **caractérisé en ce que** le premier correcteur sphérique comprend deux lentilles sphériques (18, 19), la première lentille sphérique (18) présentant une face d'entrée (4) concave pour un faisceau lumineux et la seconde lentille sphérique (19) présentant une face de sortie (7) convexe.

4. Télescope astronomique selon la revendication 2, **caractérisé en ce que** le second correcteur sphérique comprend deux lentilles sphériques (20, 21), la première lentille sphérique (20) présentant une face d'entrée (8) convexe pour un faisceau lumineux et la seconde lentille sphérique (21) présentant une face de sortie (11) concave.

5. Télescope astronomique selon la revendication 1, **caractérisé en ce que** ledit système optique comprend au moins cinq lentilles sphériques (41-45) formant un seul correcteur sphérique.

6. Télescope astronomique selon la revendication 5, **caractérisé en ce qu'**il comprend une lentille de champ (33) disposée entre le miroir réflecteur sphérique convexe (32) et le correcteur sphérique (34) et une lentille de correction de champ (37) disposée entre le correcteur sphérique (34) et la sortie du faisceau lumineux.

7. Télescope astronomique selon la revendication 5 ou 6, **caractérisé en ce que** les demi-diamètres du miroir réflecteur sphérique convexe (32) et des lentilles du correcteur sphérique sont inférieurs à 50 mm.

8. Télescope astronomique selon l'une quelconque des revendications 1 à 7, **caractérisé en ce que** les lentilles (18-21, 41-45, 51-58, 61-65) sont formées d'un verre courant.

9. Télescope astronomique selon la revendication 8, **caractérisé en ce qu'**au moins une partie des lentilles (18-21, 41-45, 51-58, 61-65) sont formées d'un verre ayant un indice de réfraction de l'ordre de 1,5.
